Europäisches Patentamt

European Patent Office

Office européen des brevets

(11) Publication number: **0 389 216
A1**

# EUROPEAN PATENT APPLICATION

(21) Application number: **90302921.3**

(22) Date of filing: **19.03.90**

(51) Int. Cl.⁵: **B27K 3/15, B27K 3/50,
C04B 41/48, B27K 3/52**

A request for correction of an unreadable part of the text (page 21) of the description has been filed pursuant to Rule 88 EPC. A decision on the request will be taken during the proceedings before the Examining Division (Guidelines for Examination in the EPO, A-V, 2.2).

(30) Priority: **20.03.89 NZ 228393**

(43) Date of publication of application:
**26.09.90 Bulletin 90/39**

(84) Designated Contracting States:
**AT BE CH DE DK ES FR GB GR IT LI LU NL SE**

(71) Applicant: **NEW ZEALAND DAIRY RESEARCH INSTITUTE
Dairy Farm Road Fitzherbert West
Palmerston North(NZ)**

Applicant: **HER MAJESTY THE QUEEN IN RIGHT OF NEW ZEALAND THE FOREST RESEARCH INSTITUTE
Sala Street
Rotorua(NZ)**

(72) Inventor: **Armstrong, Amanda Susan c/o NEW ZEALAND DAIRY
RESEARCH INSTITUTE Dairy Farm Road Fitzherbert Palmerston North(NZ)**
Inventor: **Franich, Robert Arthur
11 Awatea Terrace
Rotorua(NZ)**

(74) Representative: **Brown, John David et al
FORRESTER & BOEHMERT
Widenmayerstrasse 4/I
D-8000 München 22(DE)**

(54) **Improvements in or relating to porous materials.**

(57) The invention relates to a method of densifying a porous material. The method comprises impregnating the porous material such as wood with a protein or modified protein and cross linking or curing the protein or modified protein. A combination of the protein or modified protein and the porous material forms a composite material.

In a preferred form the protein is casein or casein modified by the use of proteolytic enzymes.

EP 0 389 216 A1

This invention relates to a method of densifying porous materials and/or to a densified composite material, and is intended particularly though not necessarily solely to provide a method of densifying wood and/or to provide a densified wood/plastics composite material.

Material in particular wood but also possibly other materials such as porous inorganic materials are used for a wide range of items for example, wood is generally used for furniture and in some instances the mechanical, physical and/or aestethic properties are inadequate for the task at hand.

This is disadvantageous.

It is therefore an object of the present invention to provide a method of densifing porous materials and/or a densified composite material which will obviate or minimise the forgoing disadvantages in a simple yet effective manner or which will at least provide the public with a useful choice.

Accordingly, in one aspect, the invention consists in a method of densifying a porous material, comprising impregnating said porous material with a protein or modified protein, and cross-linking or curing said protein or modified protein, the combination of said protein or modified protein and said porous material forming a composite material.

In a further aspect the invention consists in a densified composite material produced by the method according to the preceding paragraph.

In a yet further aspect the invention consists in a densified composite material, comprising a porous material at least some of the pores of which contain a protein or modified protein, said protein or modified protein being cross-linked or cured.

To those skilled in the art to which the invention relates, many changes in construction and widely differing embodiments and applications of the invention will suggest themselves without departing from the scope of the invention as defined in the appended claims. The disclosures and the descriptions herein are purely illustrative and are not intended to be in any sense limiting.

Certain presently preferred forms of the invention will now be described with reference to specific examples.

According to the invention, porous materials, particularly lignocellulosic substrates (e.g., wood) of low to medium density, are filled with a cross-linked or cured protein or modified protein to obtain new densified materials with enhanced properties. For example the hardness of new materials produced from porous ligno cellulosic substrates is directly proportioned to increase in density introduced by the process. The porous material, in solid wood, particle, fibre or veneer form, is impregnated with a mixture of protein or modified protein (e.g., enzyme-modified casein) and a latent formaldehyde release agent or protein cross-linking agent (e.g., certain commercial O-methyl hydroxymethyl melamine resins, glyoxal, furfuryl alcohol) in a suitable solvent using suitable solute concentrations. An initial vacuum can be applied to assist in impregnation into the material; however, alternative processes involving the introduction of treatment liquid under conditions of atmospheric pressure or elevated pressure can also be used. The impregnation step may be carried out at ambient temperature or at an elevated temperature, for example, at about 70°C.

Alternatively, the treatment process can be carried out in two steps involving protein impregnation followed by a second step in which the treated material is exposed to a cross-linking agent (e.g., formaldehyde). The treated wood member is then placed in an oven at elevated temperatures (e.g., 120°C) to effect curing and held there for a period of time (e.g., 12 hours) sufficient to cause cross-linking of the protein to a hard plastics-type material within the porous structure.

This method may be used to densify and harden wood planks as well as thin veneers and wood in particulate or fibre form. For veneers, lamination of the treated veneers onto a suitable substrate may be accomplished by cold-pressing followed by a brief heating period or by simply hot-pressing the treated veneer. The resulting wood material, whether in solid or veneer form, has been found to have improved properties, of, for example, density, compressibility, hardness, impact resistance, gluability and bond strength, water repellency, decay resistance, stability to light-induced discolouration, and strength, when compared with untreated material. Further, the surface of protein-hardened wood composite material has an attractive semi-gloss finish when polished and is less "plastic" or synthetic in appearance than composites known in the prior art and manufactured from wood and vinyl monomers (e.g. methyl methacrylate).

Further improvement in the wood properties can be obtained by depositing additives such as preservatives, fire retardants, colouring or fragrance agents in the wood and fixing the additives therein with the insolubilised protein.

The process as previously outlined essentially involves the impregnation of wood with a protein or modified protein and cross-linking of the said protein or modified protein with a suitable cross-linking agent to form a wood-plastic composite material which has superior mechanical, durability, and decorative properties.

In the examples included herein, casein has been used as the preferred protein source. It is believed however that other proteins or purified protein fractions, either alone or combined, may also have efficacy in the process. They include other milk proteins (e.g. whey proteins such as hydrolysed lactalbumin and individual milk protein fractions), other animal proteins (e.g. hydrolysed fish protein, and blood protein) vegetable protein (e.g., soy protein), microbial protein (e.g. yeast) and mixture thereof. Similarly amino acids, peptide fractions, and polyamino compounds, may also have efficacy.

The preferred process embodied herein describes the use of proteolytic enzymes to modify the protein prior to wood treatment. Suitable modification might also be accomplished by use of chemical and/or enzymatic procedures. For example, protein hydrolysis might be effected by an acid or alkaline hydrolysis, either alone or in combination with enzymatic treatment.

The examples given herein describe the treatment of lignocellulosic substrates. The mechanism by which the process is believed to impart improved characteristics to lignocellulosic materials is primarily associated with filling of voids or pores with a rigid polymeric plastics-type material. The process is therefore suitable for the densification of other porous materials (e.g. particle board, paper, cardboard, fibreboard, cloth, hessian, jute, leather, fibreglass cloth, or porous inorganic materials such as ceramics).

We have used treatment solutions comprising essentially two types of casein, and a variety of protein-curing agents.

The two types of casein which we have used by way of example are:

(a) Acid casein, which in a formulation in water was incorporated into wood, followed by a second treatment using aqueous formaldehyde to bring about cross-linking of the protein, and formation of the casein-plastics polymer within the wood.

(b) Modified casein, which had been solubilised in alkaline solution and treated with proteolytic enzymes to lower the protein molecular weight and solution viscosity which was formulated in water with a latent formaldehyde release agent or a protein cross-linking agent, incorporated into wood, and the treated wood heated to effect curing of the protein into a casein-plastics polymer within the wood.

The enzymatic treatment employed causes a marked reduction in solution viscosity which greatly improves impregnation into the wood, and at the same time maintains the casein in a form which can be chemically cross-linked.

## (A) Specific examples of wood treating solution

### Example A(1)

Acid casein (226 g) was added to water (1.4 l) heated at 66°C, with continuous stirring. To the mixture was added a salt to assist solubilising the protein, e.g., sodium hydroxide (7.4 g), ammonia solution (specific gravity = 0.88, 19 ml), or sodium tetraborate decahydrate (borax, 34 g).
This provided a solution of casein containing approximately 14% solids.

### Example A(2)

Acid casein (227 g) is added to water (587 ml) and heated to 70°C, with continuous stirring. Sodium tetraborate (34 g) and dicyandiamide (22.7 g) were added to obtain a solution of casein containing approximately 26% solids.

### Example A(3)

Sodium caseinate was produced by soaking 30 kg acid casein in 170 kg water and heating to 60°C while stirring. 4.5 litres of 4M NaOH was added and stirred for 20-30 minutes until the casein was dissolved. It was modified by reducing the temperature to 50°C, adding 30 g Pancreatic serine protease (enzyme to substrate ratio of 1:1000) and held for 30 minutes. Then 60g of a mixture of metallo-protease and serine-protease enzyme of bacterial origin (enzyme to substrate ratio of 1:500) was added and the mixture held for another 90 minutes. Temperature was maintained at 50°C. The enzymes were inactiviated by heat treating at 80-85°C for 15 minutes, and the resultant solution was spray-dried. The modified sodium caseinate (300 g) which was determined to have an hydrolysis ratio of approximately 40% was added to water (600 ml) at 70°C and with continuous stirring. Sodium tetraborate (39 g) was added to obtain a solution containing approximately 32% solids.

Example A(4)

Sodium caseinate (463 g), modified as in Example A(3), was added to water (500 ml), sodium tetraborate (54 g), and dicyandiamide (20 g) at 70°C, and with continuous stirring, to provide a solution containing 42% solids.

Example A(5)

Sodium caseinate (300 g), modified, as in Example A(3), was added to water (600 ml), and boric acid (25.4 g) and an alkylated methylolmelamine resin (38 g) added to the solution held at 70°C, while constantly stirring. This gave a solution containing 32% solids, with protein cross-linking agent already incorporated. The pH of this solution was adjusted to 4.0 by addition of concentrated hydrochloric acid.

Example A(6)

Sodium caseinate (300 g), modified, as in Example A(3), was added to water (500 ml), and boric acid (25.4 g). A urea-formaldehyde resin (100g) was added to the resultant solution which was held at 70°C, with constant stirring. This gave a solution containing 32% solids, with a protein cross-linking agent (urea-formaldehyde resin) already incorporated.

Example A(7)

Sodium caseinate (300 g), modified, as in Example A(3), was added to water (600 ml), and boric acid (25.4 g). Furfuryl alcohol (68 g) was added to the resultant solution while maintaining the solution at 70°C, and with constant stirring, to give a solution containing 32% solids, and protein cross-linking agent (furfuryl alcohol) already incorporated.

Temperature vs viscosity for treating solutions

Treatment mixtures A(1) and A(2) were very viscous with A(2) being non-pourable at 20°C. At 70°C, solution A(1) was of sufficiently low viscosity to allow impregnation of wood.
For treatment solution A(3) and variants, viscosity at 30°C was 344 cp, and at 70°C was 81 cp.
Since wood is readily impregnated with solutions of low viscosity, and cannot easily be impregnated with highly viscous materials, the use of solutions at 70°C or above has been shown to greatly facilitate the process.

Wood samples

The treatment process is most applicable to the sapwood of any softwood or hardwood. For a typical softwood, radiata pine sapwood (Pinus radiata) having a density of 410-480 kg/m$^3$, and a moisture content of 12% was used. Other New Zealand woods treated using the process have been silver beech (Nothofagus menziessii) and rimu (Dacrydium cupressinum).

(B) Impregnation process

B(1) Solid Wood

4

### (a) Small Scale

A Parr high pressure reaction vessel (suitable for 1400 KPa or c.200 psi) which could also be evacuated was used. The treatment solutions were either placed in the vessel with the wood to be impregnated, or the solutions were introduced through a valved port after the wood had been placed in the vessel and the apparatus sealed. Typically, sapwood blocks were placed in the vessel, and blocks of glass or of stainless steel placed on the wood to prevent them floating. The treatment solution, at 70°C was passed into the vessel to completely cover the blocks, with an excess volume greater than that of the wood. The vessel was sealed and evacuated to remove air from the wood. Typically, the vacuum applied was in the range 1-25 mm, Hg. A problem encountered during the vacuum stage of the process was foaming of the caseinate solution. A trap was necessary between the treatment vessel and the vacuum pump. By adding a small amount of an antifoaming agent (e.g., octanol or a proprietary product,) the foaming could be reduced. After a period of time under vacuum, (typically 3-20 min), the vacuum was collapsed, and the vessel then pressurised with air, nitrogen, or argon, (air preferred) to 1400 KPa, and held under pressure for a period of time (typically 10 min to 12 hr periods were tried). The vessel was maintained at approximately 70°C throughout the process.

When the treatment solution was introduced through a port after the wood blocks had been evacuated, no foaming problem was encountered. The blocks were weighed to assess uptake of the treatment solution.

### (b) Large Scale

Planks up to 100 x 50 x 1200 mm were accommodated in a large treatment vessel. The wood planks were evacuated separately, and the hot treatment solution then introduced through a valved port. The vacuum-pressure cycles used were typically those employed for the small-scale experiments.

### B(2) Veneer

Veneer treatments were conducted by placing sheets of veneer in an autoclavable container. The sheets were weighed down and then covered with a treatment solution prepared according to the procedure described in Example A(5) and maintained at 70°C. The container was then placed in a large pressure chamber (suitable for 1400 KPa or about 200 psi). The chamber was sealed and, after five minutes at a vacuum of 100 mm Hg the vacuum was collapsed and the pressure raised to 1400 KPa for 30 minutes. The pressure was then released and the veneers removed for air-drying.

After drying for two hours, the veneer sheets were glued to the face of a section of five-ply radiata pine plywood using urea-formaldehyde adhesive and then pressed under 10 tones force with the press at 80°C for six minutes. This was sufficient to cure the adhesive. The surface of the veneer was lightly sanded and polished. This was the preferred method, although it was also demonstrated that veneers could be cold-pressed to plywood and the composite then heated to achieve the same end product.

### (C) Curing the protein by cross linking agents

(1) After treating wood blocks with example solutions A(1), A(2), A(3) or A(4) the wet blocks were transferred to a bath of formaldehyde (over a range of strengths from 10% to 37%) to cross-link the protein to form a plastic. The blocks were left in contact with the formaldehyde for varying periods from 1 day to 3 weeks, depending on the size of the blocks. After curing, the blocks were removed, dried, and transferred to a vacuum oven held at 50°C and 20 mm Hg pressure for varying periods to remove excess of formaldehyde from the blocks.

(2) After treatment with example solutions A (5)-(7), the wood blocks were heated to a temperature (in range 70°-130°C) sufficient to effect cross-linking the protein to a plastic polymer. Heating times varied from 20 min to 12 hr, depending on the volume of the blocks. The dried blocks were then weighed to assess dry weight gain, and subjected to a range of tests including hardness, strength properties, impact resistance, colour fastness, water repellency, decay resistance, gluability and bond strength.

### (D) Finishing

The treated, cured blocks, planks, or veneers were sandpapered to remove surface bound material, and then buffed which produced a wood-casein plastic composite having a high density, and a hard, mar-resistant surface with an attractive semigloss appearance. Coloured and hardened materials were produced by incorporating dyes (e.g. BASF Zapon) or finely-dispersed pigments (e.g. BASF Luconyl) in the treatment liquid.

Examples of wood property improvements obtained by the process

(i) Hardness: Samples of radiata pine sapwood (100 x 15 x 15 mm) were treated using Example Solution A(5) and after curing were tested for surface hardness by measuring the force required to indent the surface by 1 mm using a stainless steel wedge. A mean hardness of 240 MPa was recorded which compared with the range of 60-90 MPa for untreated radiata pine sapwood. The process therefore demonstrates a hardness improvement factor of three to four fold over untreated radiata pine.

(ii) Impact resistance: Samples of radiata pine sapwood (90 mm tangential x 18 mm radial x 125 mm longitudinal) were treated using Example Solution A(5) and after curing were tested for impact resistance by measuring the depth of indentation when a weight (4.6 kg) with a hemi-spherical head (25.3 mm diameter) was dropped from a height of 500 mm on to the tangential face of each sample. Measurements were made at three points on each of five treated and five untreated samples. The mean depth of indentation of untreated samples was 2.45 mm, whereas the mean depth of indentation of treated samples was 1.83 mm. The difference in indentation was statistically significant at the 5% level.

(iii) Strength: Samples of radiata pine sapwood, selected on the basis of minimal grain deviation, (150 x 10 x 10 mm) were treated using Example Solution A(3) and, after exposure to formaldehyde, were cured and tested for stiffness (modulus of elasticity - MOE) and bending strength (modulus of rupture - MPR). Measurements were made on 10 treated samples and 10 matching samples of untreated radiata pine sapwood. Mean MOE of treated samples was 11504 MPa and for untreated samples was 10645 MPa (no statistically significant difference). Mean MOR of treated samples was 139.6 MPA and for untreated samples was 117.7 MPa (statistically significant difference).

(iv) Water repellency: Samples of radiata pine sapwood (173 mm tangential x 38 mm radial x 6 mm longitudinal) treated using Example Solution A(5) and cured, were then examined for water repellency by water immersion and measurement of swelling in the tangential direction.

Water repellency, as measured by swelling in the tangential direction, was significantly better than that obtained with untreated radiata pine. For example, sample swelling by 2 mm had occurred after 100 seconds in the untreated material but did not occur until 3160 seconds after immersion in the case of the treated material.

(v) Decay resistance: Samples of radiata pine sapwood (40 mm x 40 mm x 5 mm longitudinal) were treated using Example Solution A(3), exposed to formaldehyde for five days to effect curing, and then placed in an oven at 40°C for seven days to remove excess formaldehyde vapour. The samples were then exposed to one white-rot and three brown-rot fungi in a modified version of the British Standard 6009 test procedure. Weight losses for treated and untreated material after eight week's exposure were as shown below.

| Fungus | Weight losses (%) Treated | Untreated |
|---|---|---|
| C. versicolor | 1.53 | 8.58 |
| C. puteana | 1.10 | 31.80 |
| F. gilvus | 0.09 | 9.40 |

| G. sepiarium | 0.35 | 12.60 |
|---|---|---|

The results showed that the material was essentially decay-resistant under the simulated above-ground conditions of the test.

(vi) Colour stability: Samples of radiata pine sapwood (230 mm longitudinal x 65 mm tangential x 9 mm radia) were treated using Example Solution A(3) and, following exposure to formaldehyde and curing, were exposed outdoors on 45° exposure racks facing north. Colour saturation or depth of colour was measured as a function of time and compared with that of untreated samples. After four months the colour saturation of the untreated samples had decreased by 65% whereas the colour saturation of the treated samples had only decreased by 15%. Samples of radiata pine sapwood treated using Example Solution A(3) were cured and then placed behind glass in cabinets facing north on a test fence. Colour was measured in $L^*$ $a^*$ $b^*$ colour space co-ordinates after 44 days' exposure. Changes in average $L^*$ $a^*$ $b^*$ values were expressed as follows:

% change from original

| | $L^*$ (lightness) | $a^*$ (red-green axis) | $b^*$ (yellow-blue axis) |
|---|---|---|---|
| Treated | -5.0 | +38 | +28 |
| Untreated | -4.8 | +11 | +38 |

The smaller difference in $b^*$ value recorded for the treated material is indicative of less yellowing in the treated material than in untreated material and this is evident on examining the samples.

(vii) Gluability: Samples of radiata pine sapwood (230 x 63 x 19 mm) were treated using Example Solution A(5), cured, and then tested for gluability using four adhesive types and the ASTM D-905 shear block test procedure. The mean force at failure for treated samples and untreated controls is summarised below:

| Mean force at failure (MPa) | | |
|---|---|---|
| Adhesive | Treated | Untreated |
| Resorcinol-formaldehyde | 16.60 | 10.14 |
| Cross-linked PVA | 19.76 | 11.07 |
| Epoxy | 16.03 | 8.62 |
| Urea-formaldehyde | 16.39 | 10.44 |

In each case the bond strength as measured by the shear block test was significantly greater for the treated samples than for the untreated samples.

The properties of the densified product can be enhanced by the addition of additives to the protein or modified protein based treating solution and fixing these additives in the insolubilised protein within the porous material. Additives can include wood preservatives such as borax and/or boric acid, zinc salts or copper salts, fire retardents such as inorganic phosphates, colouring agents such as water soluable dyes and fragrance agents, such as cadrene.

| Examples of the densification of other materials using hydrolysed casein (32% w/w formulation) | |
|---|---|
| Material | Density increase after treatment and curing (%) |
| Newsprint | 96.0 |
| Cardboard | 71.5 |
| Natural Hessian | 29.6 |
| Leather | 74.8 |
| Fibreglass Cloth | 53.9 |
| Black Sand Ceramic | 10.0 |

| Examples of the densification of radiata pine sapwood using alternative proteins | |
|---|---|
| Protein type | Range of density increase after treatment and curing (%) |
| Soy protein (I) | 12.5 - 21.9 |
| Soy protein (II) | 22.5 - 25.1 |
| Nono-hydrolysed yeast | 24.0 - 25.1 |

Thus it can be seen that according to the invention a method of densifying porous materials, especially wood, and/or a composite material, are provided, whereby the resulting material has improved mechanical, physical and/or aesthetic properties compared with untreated material, for use for example in applications where wood is generally used, such as in furniture. It is believed that the method herein disclosed may be applicable to the treatment of porous inorganic materials, in addition to the organic used in the examples.

The features disclosed in the foregoing description, in the following claims and/or in the accompanying drawings may, both separately and in any combination thereof, be material for realising the invention in diverse forms thereof.

## Claims

1. A method of densifying a porous material, comprising impregnating said porous material with a protein or modified protein, and cross-linking or curing said protein or modified protein, the combination of said protein or modified protein and said porous material forming a composite material.

2. A method as claimed in Claim 1 wherein said material is impregnated with a mixture of a protein or modified protein and a latent protein cross-linking agent.

3. A method as claimed in Claim 1 wherein said material is impregnated with a protein or modified protein and then the impregnated material is exposed to a protein cross-linking agent.

4. A method as claimed in any one of the preceding claims wherein the impregnation step is carried out under conditions of vacuum, or elevated pressure, or under a sequence of conditions including both vacuum and elevated pressure.

5. A method of densifying a porous material wherein said porous material is impregnated with a modified protein hydrolysed by treatment with any one or combination of an acid, alkali, or enzyme.

6. A method as claimed in any one of the preceding claims the impregnation step is carried out at ambient temperature or at an elevated temperature.

7. A method as claimed in any one of the preceding claims including the step of curing the protein and cross-linking agent.

8. A method as claimed in Claim 7 wherein the curing step is carried out at ambient temperature of at an elevated temperature.

9. A method as claimed in any one of the preceding claims wherein said protein is casein or casein modified by use of proteolytic enzymes.

10. A method as claimed in any one of the preceding claims wherein said cross-linking agent is selected from the group consisting of formaldehyde, an alkylated methylolmelamine resin, glycouril, benzoguanamine, glyoxal and furfuryl alcohol.

11. A method as claimed in any one of the preceding claims wherein said porous material comprises a lignocellulosic substrate.

12. A method as claimed in Claim 11 wherein said substrate is wood.

13. A method as claimed in Claim 12 wherein said wood is in a form selected from the group consisting of solid wood blocks, planks, articles, and veneers.

14. A method as claimed in Claim 12 wherein said wood is selected from softwoods and hardwoods.

15. A method as claimed in any one of the preceding claims wherein said composite material has one or more improved properties selected from density, compressibility, hardness, impact resistance, gluability, bond strength, water repellancy, decay resistance, stability to light induced discolouration, strength, and decorative properties, when compared with untreated porous material.

16. A method as claimed in Claim 15, further wood preservatives, fire retardants, colouring agents or fragrance agents added to said protein or modified protein based treating solution and said additives being fixed ;with the insolubilised protein within the porous material.

17. A method as claimed in Claim 16 wherein said wood preservatives comprise any one or more of borax, boric acid, zinc salts or copper salts.

18. A method as claimed in either Claim 16 or Claims 17 wherein said fire retardent comprises an inorganic phospshate.

19. A method as claimed in any one of Claims 16 to 18 wherein said colouring agent comprises a water soluble dye.

20. A method as claimed in any one of Claim 16 to 19 wherein said fragrance agent comprises cadrene.

21. A composite material produced by a method as claimed in any of the preceding claims.

22. A composite material, comprising a porous material at least some of the pores of which contain a protein or modified protein, said protein or modified protein being cross-linked or cured.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | GB-A-1 194 018 (GLOWNY INSTYTUT GORNICTWA) <br> * The whole document * <br> --- | 1,3-6, 10-16, 21,22 | B 27 K 3/15 <br> B 27 K 3/50 <br> C 04 B 41/48 <br> B 27 K 3/52 |
| X | US-A-2 262 770 (F.G. LA PIANA) <br> * Page 1, right-hand column, line 14 - page 2, left-hand column, line 19; page 2, right-hand column, line 26 - page 3, right-hand column, line 55; page 4, left-hand column, lines 3-27 * <br> --- | 1-3,5-8 ,10,21, 22 | |
| A | US-A-3 935 341 (K.-O. SORENSEN et al.) <br> * The whole document * <br><br> --- | 1,3,4,6 -8,10- 14,16, 17 | |
| A | DE-B-1 243 806 (FAHLBERG-LIST) <br> * The whole document * <br> --- | 1,3,10- 13 | |
| A | GB-A- 455 533 (G.S. MAY) <br> * The whole document * <br> ----- | 1,11-15 | |

TECHNICAL FIELDS SEARCHED (Int. Cl.5)

B 27 K
C 04 B

The present search report has been drawn up for all claims

| Place of search | Date of completion of the search | Examiner |
|---|---|---|
| THE HAGUE | 29-06-1990 | FLETCHER A.S. |

EPO FORM 1503 03.82 (P0401)